# NOUVEAU FASCICULE DE BREVET EUROPEEN

(11) **EP 1 879 687 B2**
(45) Date de publication et mention de la décision concernant l'opposition: **14.08.2019**
(45) Mention de la délivrance du brevet: 11.03.2009
(21) Numéro de dépôt: 06755481.6
(22) Date de dépôt: 10.05.2006
(51) Int. Cl.: B01F 3/00, C23G 5/032, C07D 493/04, D06B 1/00

(54) **PROCEDE POUR LE TRAITEMENT DE SURFACE D'UNE MATIERE METALLIQUE OU FIBREUSE**
VERFAHREN ZUR BEHANDLUNG DER OBERFLÄCHE EINES METALLMATERIALS ODER FASERMATERIALS
METHOD FOR THE SURFACE TREATMENT OF A METALLIC OR FIBROUS MATERIAL

(30) Priorité: 12.05.2005 FR 0504780
(43) Date de publication de la demande: 23.01.2008
(60) Demande divisionnaire: 08164423.9
(73) Titulaire: ROQUETTE FRERES, 62136 Lestrem (FR)
(72) Inventeur: MENTINK, Léon, F-59100 Roubaix (FR); BERNAERTS, Joël, F-62122 Labeuvrière (FR)
(74) Mandataire: Cabinet Plasseraud
(86) Numéro de dépôt international: PCT/FR2006/001042
(87) Numéro de publication internationale: WO 2006/120343

(56) Documents cités:
- WO-A-2004/105722
- GB-A- 2 139 496
- US-A- 5 258 070
- US-A- 5 421 907
- US-A- 5 843 194
- US-A1- 2002 174 596
- US-A1- 2002 192 173
- US-B1- 6 524 604

## Description

La présente invention a pour objet l'utilisation d'un éther de dianhydrohexitol, de préférence le diméthylisosorbide (« DMI ») ou le diméthylisoidide (« DMIi »), dans une composition de traitement de surface, pour le dégraissage d'une matière autre que le corps humain choisie parmi les matières métalliques, par la mise en contact de ladite matière avec ladite composition.

Parmi les éthers de dianhydrohexitol, le DMI, connu depuis plus de 50 ans, est celui qui a fait l'objet du plus grand nombre d'études en termes de préparation et d'applications. Ce composé est tout particulièrement préconisé dans le traitement du corps humain comme agent vectorisant de principes actifs permettant à ceux-ci d'atteindre plus efficacement leur cible à l'intérieur du corps humain. Il est notamment utilisé comme « dermo-pénétrant » en vue d'améliorer la pénétration de principes actifs dans les couches supérieures de l'épiderme, de nature protéique (kératine). Son usage comme vecteur d'agent kératolytique en vue d'améliorer l'absorption percutanée dudit agent est, par exemple, décrite dans la demande de brevet WO 2004/105722.

Cependant, force est de constater que, à ce jour, dans les domaines pharmaceutique et cosmétique, le DMI n'est exploité industriellement et commercialement qu'en quantités relativement restreintes et ce, dans des « niches » applicatives telles que crèmes auto-bronzantes ou crèmes anti-acnéiques.

Dans le cadre du traitement du corps humain, il a été également décrit, dans le brevet US 5 258 070, le traitement des ongles par une composition destinée à éliminer le vernis préalablement déposé à leur surface. Au sein de cette composition, le DMI est présent à raison de 5% en poids seulement (selon les exemples), et ne joue qu'un rôle de « catalyseur » permettant au mélange binaire particulier de carbonate de propylène et de propylèneglycol d'agir efficacement comme solvant du vernis à ongles. Il est d'ailleurs souligné que le mélange binaire DMI/carbonate de propylène ou le mélange binaire DMI/propylèneglycol n'a aucune fonction de dissolution du vernis. Dans ce document, les effets précis du DMI n'apparaissent pas clairement, notamment en regard de ses aptitudes potentielles, ici non souhaitées, à pénétrer à l'intérieur de la kératine constitutive de l'ongle et à y vectoriser l'un et/ou l'autre des solvants.

En tout état de cause, de telles compositions dissolvantes pour vernis à ongles contenant du DMI n'ont a priori jamais été mises sur le marché et on doit considérer, compte-tenu de ce qui précède, que si elles devaient l'être un jour, elles ne contiendraient qu'une faible ou très faible proportion de DMI.

Concernant le traitement d'une matière autre que le corps humain, il n'existe, à la connaissance de la Demanderesse, qu'un seul document publié, à savoir le brevet US 5,843,194, qui divulgue l'usage de DMI dans le domaine particulier des compositions gélifiées destinées à la préparation de bougies. Dans ce contexte particulier, le DMI est utilisé dans la masse constitutive de la bougie, obligatoirement en faibles proportions (6% maximum en pratique) et en association avec de l'alcool isostéarylique, et ce à des fins esthétiques et notamment comme agent améliorant la clarté de la flamme (*flame-enhancing agent*). Il apparaît cependant qu'en l'absence d'alcool isostéarylique, le DMI ne permet pas d'obtenir une bougie satisfaisante en termes de combustion mais également de transparence. A la connaissance de la Demanderesse, l'utilisation de DMI dans la préparation de bougies, en particulier comme « flame-enhancing agent », n'a jamais connu de développement industriel et commercial.

Le constat peut être donc fait que, à ce jour, l'exploitation industrielle et commerciale des éthers de dianhydrohexitol, y compris du DMI, reste très limitée dans le domaine du traitement du corps humain et est inexistante dans les autres domaines, en particulier dans les domaines de la détergence, des encres et peintures, des matériaux de construction, de la métallurgie, de l'imprimerie, de la papeterie, du textile, des produits phytosanitaires, des adhésifs, des revêtements industriels et de l'électronique.

La Demanderesse a désormais constaté que des propriétés non révélées à ce jour des éthers de dianhydrohexitol étaient exploitables dans de nombreux autres domaines. Elle a notamment observé que l'utilisation des éthers de dianhydrohexitol dans des compositions spécifiquement destinées au traitement de surface de certaines matières métalliques autres que le corps humain, permettait d'augmenter singulièrement les possibilités d'exploitation industrielle et commerciale non seulement desdits éthers mais également d'autres composés de natures et fonctionnalités diverses pouvant avantageusement être associés auxdits éthers.

De manière remarquable, il a été constaté qu'une telle utilisation d'éthers de dianhydrohexitol avait pour effet de ne pas détériorer voire d'améliorer a) les conditions de préparation et/ou d'utilisation de ces compositions de traitement de surface mais aussi b) les performances et caractéristiques physiques, intermédiaires ou finales, desdites compositions, voire même des matières métalliques dont la surface avait été traitée par de telles compositions.

En suite de quoi, la présente invention a pour objet l'utilisation pour le dégraissage d'une matière autre que le corps humain choisie parmi les matières métalliques, ladite utilisation utilisant au moins un composé A choisi parmi les éthers de dianhydrohexitol, dans une composition de traitement de surface.

Par « traitement de surface d'une matière autre que le corps humain », on entend toute opération appliquée à la surface de toute matière, de nature organique et/ou minérale, autre que le corps humain. Cette définition exclut en particulier les traitements appliqués, directement et « in vivo », à l'être humain, y compris au niveau de sa peau ou de ses ongles, en vue d'un effet thérapeutique ou cosmétique et les traitements effectués dans la totalité de la masse constitutive de la matière en cause, par exemple par mélange de la composition avec ladite matière.
La matière traitée en surface conformément à l'invention est choisie parmi les matières métalliques. Elle peut cependant présenter, au sein de ces groupes, des origines, natures, propriétés et destinations extrêmement variables. Il peut s'agir de toute matière métallique se présentant sous la forme d'articles et de structures de toutes formes, dimensions et fonctionnalités telles que tiges, feuilles, films, revêtements, plaques, tôles, pièces destinées aux industries automobile, navale ou aéronautique, carrosseries, véhicules, armatures, cuves, coffrages, boîtes d'emballage, moules, tuyaux, rouleaux, blanchets d'imprimerie, pompes, outils, appareillages, instruments, visserie, coutellerie, prothèses, pièces destinées à l'électroménager, composants électroniques et microélectroniques, disquettes, composants semiconducteurs etc.

Selon l'invention, le traitement de surface consiste en une opération de dégraissage.

Compte tenu de la diversité des matières métalliques à dégraisser, il est fait appel industriellement, en vue dudit dégraissage, à une multitude de compositions se présentant sous différentes formes (liquide, émulsionnée, pâteuse, solide, gazeuse, en aérosol etc.). Il peut s'agir en particulier de compositions, entièrement formulées ou non, directement utilisables en l'état ou non.

Quelles que soient la fonctionnalité et la destination de chacune de ces compositions, il est souhaité, dans la pratique industrielle actuelle, que tout moyen mis en oeuvre lors de sa préparation puisse présenter l'ensemble des critères listés ci-après :
a) être suffisamment efficace pour toute fonction à laquelle il est destiné pour un traitement de surface donné,
b) ne pas détériorer, et si possible améliorer, les conditions de préparation et/ou les conditions d'utilisation de toute composition dans laquelle il est incorporé en vue d'un traitement de surface donné,
c) ne pas détériorer, et si possible améliorer, les performances et caractéristiques physiques intermédiaires et finales de ladite composition ou de toute matière traitée en surface avec ladite composition,
d) présenter une innocuité élevée et le minimum de désagréments, notamment en termes de protection de l'homme et de l'environnement,
e) être issu de matières d'origine naturelle et si possible renouvelables.

En particulier, il est tout particulièrement recherché un moyen qui :
a) soit véritablement efficace, par exemple comme agent nettoyant, mouillant, dispersant, lubrifiant, compatibilisant.
b) soit avantageusement utilisable dans des compositions destinées à être appliquées en surface (i) aussi bien à froid qu'à chaud et/ou aussi bien à pH neutre qu'à pH acide ou basique.
c) ne détériore pas, si possible améliore, les caractéristiques physiques, organoleptiques et plus généralement applicatives, par exemple le pouvoir filmogène, le pouvoir mouillant, la viscosité, la volatilité, la miscibilité à l'eau, la stabilité chimique, la couleur, la transparence et/ou l'odeur, desdites compositions, mais également les caractéristiques, y compris organoleptiques, de toute matière, par exemple de toute surface de métal, de bois, de papier ou textile, traitée en surface avec lesdites compositions.
d) soit écologiquement plus acceptable que les adjuvants de même(s) fonctionnalité(s) classiquement utilisés, par exemple les éthers de glycols, les hydrocarbures d'origine fossile ou les solvants chlorés en général, et notamment :
   - ne contienne pas de substances dangereuses et notamment de substances reconnues comme toxiques, cancérigènes ou mutagènes,
   - présente une faible propension à générer des composés organiques volatiles (COV ), y compris lors de l'application à chaud des compositions le contenant, et présente en particulier une pression de vapeur, à 25°C, inférieure à 13,3 Pa, de façon à préserver la couche d' ozone,
   - présente un point éclair élevé, de préférence supérieur à 60°C, en particulier supérieur à 70°C, de façon à ne pas induire d' explosion,
   - présente une odeur acceptable, en tous cas significativement moins incommodante ou irritante que les adjuvants classiques en général,
   - présente une bonne rinçabilité, i.e une bonne aptitude à être entraîné par une solution aqueuse tout en étant inoffensif pour l'environnement (absence de bioaccumulation, absence de toxicité pour la flore et la faune, notamment aquatique, et biodégradabilié suffisante).

En vue de limiter l'usage de composés reconnus dangereux ou toxiques pour l'homme et/ou l'environnement tels que les hydrocarbures d'origine fossile, les solvants chlorés ou les éthers de glycols, il a notamment été proposé depuis une trentaine d'années, de les remplacer en tout ou partie par des compositions à base d'ester(s).

L'usage d'esters de l'acide lactique a, par exemple, été décrit :
- dans la préparation de peintures, laques ou vernis dans les brevets US 3 985 691, EP 659 856 ou EP 851 298,
- en association avec des glycérides ou dérivés, dans la préparation de compositions solvantes en général dans le brevet WO 01/18162 ou spécifiquement destinées au nettoyage de surfaces souillées par de l'encre dans le brevet WO 01/74984,
- dans la préparation de compositions lubrifiantes dans le brevet WO 03/106599,
- sous forme de dérivés de type mono- et poly lactyl lactate d'alkyle, dans le nettoyage ou le dégraissage de pièces métalliques dans le brevet WO 03/087284,

Les compositions contenant des esters d'acide lactique présentent cependant un certain nombre d'inconvénients et notamment : un manque de pouvoir solvant pour les matières très hydrophobes, une odeur relativement prononcée, un point éclair relativement bas (46°C pour le lactate d'éthyle) et une grande inflammabilité, une tension de vapeur élevée, une instabilité élevée en milieu alcalin, une résistance à l'hydrolyse relativement faible et un caractère irritant (présence d'acide lactique libre).

Pour pallier tout ou partie de ces inconvénients, il a été préconisé d'associer lesdits esters, respectivement :
- à des esters d'acides gras en vue d'augmenter le point éclair des compositions solvantes résultantes (WO 01/18162),
- à des amines tertiaires en vue d'améliorer l'odeur de celles-ci (WO 03/016449),
- à du d-limonène en vue d'en améliorer les possibilités d'usage en général, y compris le pouvoir solvant de matières très hydrophobes (US 6 797 684).

En vue de limiter l'usage de solvants reconnus dangereux pour l'homme et/ou l'environnement, il a également été proposé de les remplacer, en tout ou partie, en association ou non avec des esters d'acide lactique, par des compositions à base de produits tels que les esters méthyliques d'huiles végétales, les esters d'acides dicarboxyliques ou esters dibasiques (« Dibasic Esters » ou « DBE ») ou les terpènes comme le d-limonène.

Ces produits présentent cependant les inconvénients suivants :
- esters méthyliques d'huiles végétales, par exemple de colza, de soja, de tournesol ou de ricin : odeur prononcée, couleur prononcée, non miscibilité à l'eau, absence de rinçabilité, pouvoir solvant limité (applicable à peu de matières et avec une efficacité souvent limitée), viscosité souvent inadaptée, aptitude à figer à froid,
- esters dibasiques, par exemple les esters diméthyliques d'acides adipique, glutarique ou succinique et leurs mélanges : pouvoir solvant limité, faible miscibilité à l'eau, mauvaise rinçabilité, viscosité parfois inadaptée (soit trop faible, soit trop élevée), stabilité insuffisante, caractère irritant dû à la présence d'acides libres,
- terpènes (d-limonène) : non miscibilité à l'eau, non rinçabilité, point éclair relativement bas (48°C), caractère irritant, faible stabilité chimique (auto-oxydation).

La Société Demanderesse a trouvé que dans le domaine particulier du dégraissage d'une matière autre que le corps humain choisie parmi les matières métalliques, il était désormais possible de disposer d'un moyen qui :
- non seulement, en tant que tel, vérifie l'ensemble des critères a) à d) précités,
- mais encore permet de formuler avantageusement, en regard notamment desdits critères, de nouvelles compositions pour le dégraissage.

Ce moyen consiste donc en l'utilisation d'un éther de dianhydrohexitol (ici désigné « composé A ») comme composant desdites compositions.

Par « éther de dianhydrohexitol » on entend notamment tout composé A choisi parmi les monoéthers de dianhydrohexitols, les diéthers de dianhydrohexitols et les mélanges de ces éthers.

Il s'agit de préférence des éthers alkyliques de dianhydrohexitols et en particulier des éthers de méthyle, d'éthyle, d'hexyle ou de 2-éthylhexyle de l'isosorbide, de l'isomannide et/ou de l'isoidide.

Ledit composé A peut notamment être constitué, en totalité ou majoritairement (i.e. pour au moins 50 % de sa matière sèche), de diméthylisosorbide (« DMI »), de diéthylisosorbide (« DEI »), de di-2-éthylhexylisosorbide (« DEHI ») et/ou de diméthylisoidide (« DMIi »).

Ledit composé A peut être présent en toutes proportions au sein de la composition utilisée dans le procédé de l'invention. Il peut ainsi, en fonction notamment de la nature précise et de la destination de ladite composition :
- être le composant majoritaire, voire le composant quasi exclusif de ladite composition et représenter de 51 à 100%, notamment de 55 à 99,5%, du poids de ladite composition, ou inversement,
- représenter moins de 50%, notamment de 10 à 45%, du poids de ladite composition.

L'éther de dianhydrohexitol (composé A) représente de préférence plus de 5%, en particulier plus de 10% et plus préférentiellement encore plus de 15%, du poids de ladite composition.

De manière particulièrement avantageuse, il peut être associé, au sein de ladite composition, à au moins un composé (ci-après appelé composé B) choisi parmi les agents solubilisants, les agents alcalins ou les agents acides.

La présente invention par conséquent également pour objet l'utilisation d' un éther de dianhydrohexitol (Composé A) et au moins un composé B choisi parmi les agents solubilisants, les agents alcalins et les agents acides), dans une composition de traitement de surface, pour le dégraissage d'une matière autre que le corps humain choisie parmi les matières métalliques comprenant la mise en contact de ladite matière avec ladite composition.

Le composé A peut être majoritaire ou, inversement, minoritaire par rapport au composé B.

Selon une première variante, le composé A et le composé B sont présents dans la composition utilisée dans le procédé de l'invention en un rapport pondéral composé A/composé B, exprimé en poids sec/poids sec, compris entre 2/98 et 98/2, de préférence compris entre 5/95 et 95/5.

Comme indiqué précédemment, le composé B, optionnel, peut notamment être choisi parmi les agents solubilisants.

Par « agents solubilisants », on entend notamment les solvants classés dans les catégories suivantes : solvants légers, solvants lourds, solvants de couplage (« tiers solvants ») et composés solvo-surfactifs.

Qu'ils appartiennent ou non aux catégories précitées, les agents solubilisants peuvent en particulier appartenir à l'une des familles suivantes :
- les alcools gras liquides à 25 °C tels que le butanol, l'isobutanol, l'isobutylcarbinol, l'hexanol, l'heptanol, l'octanol, le nonanol et le décanol,
- les alcools non gras tels que les sucre-alcools, en particulier les hexitols, anhydrohexitols tels que l'isosorbide et pentitols, le glycérol, le méthanol, l'éthanol, le 2-butoxyéthanol, l'isopropanol, le propane-1-ol et l'alcool benzylique,
- les composés terpéniques tels que le d-limonène, le dipentène, les pinènes, les huiles essentielles d'agrumes, de pin, d'eucalyptus ou de camphre, les essences de térébenthine,
- les aldéhydes tels que le benzaldéhyde et ses dérivés,
- les cétones telles que la N-méthylpyrrolidone (NMP), la cyclohexanone et l'isophorone,
- les composés fluorés, en particulier les hydrofluoroéthers (HFE), les hydrofluorocarbures (HFC), les hydrochlorofluorocarbures (HCFC) comme les hydrofluoroalcanes et hydrochlorofluoroalcanes
- les composés soufrés,
- les éthers, en particulier, de glycérol, d'hexylèneglycols ou de propylèneglycols,
- les esters, en particulier :
   * les esters de glycérol tels que triacétine, tributyrine, tricapryline, trioctanine ou trioléine,
   * les esters de dianhydrohexitols, notamment d'isosorbide, d'isomannide ou d'isoidide,
   * les esters de monoacides non gras tels que les lactates, carbonates ou acétates de méthyle, d'éthyle, de butyle, d'isobutyle, de propyle, d'isopropyle, d'amyle et de benzyle,
   * les esters de polyacides non gras tels que les citrates, adipates, succinates ou glutarates (de méthyle, d'isobutyle),
   * les esters d'acides gras, notamment issus de corps gras végétaux (esters méthyliques, n-propyliques, iso-propyliques, butyliques, éthylhexyliques),
- les fluides supercritiques, notamment le CO₂ supercritique.

Selon une première variante avantageuse, l'agent solubilisant associé à l'éther de dianhydrohexitol dans la composition utilisée dans le procédé selon l'invention présente :
a) une pression de vapeur, à 25°C, inférieure à 13,3 Pa, de préférence au plus égale à 10 Pa, et/ou
b) un point éclair supérieur à 60°C, de préférence supérieur à 70°C et plus préférentiellement encore supérieur à 85 ° C, et/ou
c) une biodégradabilité telle qu'après 28 jours, au moins 20 %, de préférence au moins 70 %, dudit agent solubilisant, se soit dégradé.

La biodégradabilité est ici mesurée selon la méthode, ci-après désignée « OCDE 302 B », préconisée par l'OCDE sous les N° et titre suivants : N°302 B - Biodégradabilité intrinsèque : essai Zahn - Wellens / EMPA (' *Inherent Biodegradability : Zahn* - *Wellens* / *EMPA Test* ').

Selon une seconde variante, associée ou non avec la précédente, ledit agent solubilisant est choisi dans le groupe comprenant les alcools gras liquides à 25°C, les alcools non gras, les esters de glycérol et de dianhydrohexitols, les esters de monoacides non gras, les esters de polyacides non gras, les esters d'acides gras, les composés terpéniques, les éthers de glycérol, les éthers de propylèneglycols, les composés fluorés, les composés soufrés, les fluides supercritiques et les mélanges de ces produits.

Ledit agent solubilisant peut alors être avantageusement choisi dans le groupe comprenant a) les alcools non gras, en particulier l'isosorbide, le glycérol, l'éthanol, le propanol, l'isopropanol et le 2-butoxyéthanol, b) les esters de glycérol et de dianhydrohexitols, en particulier la triacétine, la tributyrine, les acétates, les n-butyrates, les isobutyrates, les hexylates, les éthylhexylates et les octanoates d'isosorbide ou d'isoidide, c) les esters, en particulier méthyliques, éthyliques, n-butyliques, isobutyliques, n-propyliques, isopropyliques, hexyliques et éthylhexyliques, des acides lactique, acétique, adipique, succinique, glutarique ou des acides gras comprenant de 3 à 24 atomes de carbone, d) les composés terpéniques, en particulier le d-limonène et les pinènes, e) les éthers de glycérol et f) les mélanges de ces produits.

De manière générale, on préfère mettre en oeuvre un agent solubilisant qui est liquide à 25 °C.

La Société Demanderesse a, dans un premier temps et à l'issue de nombreux travaux de recherche et d'analyse, démontré que les éthers de dianhydrohexitols présentaient de multiples autres avantages que ceux jusqu'alors effectivement décrits et exploités depuis plus de 50 ans et ce, plus particulièrement pour le DMI et dans le domaine du traitement du corps humain (absence de caractère irritant et de toxicité pour l'homme, faible odeur, miscibilité à l'eau en toutes proportions, point éclair élevé).

Elle a notamment démontré que ces éthers, et notamment le DMI, présentaient l'ensemble des avantages ci-dessous, jusqu'alors jamais décrits, a fortiori jamais exploités, en tous cas à sa connaissance:
∘ une vitesse d'évaporation par rapport à l'acétate de n-butyle extrêmement faible (inférieure à 0,005 à 20 °C ), traduisant une très faible propension à générer des composés organiques volatils (COV),
∘ une biodégradabilité facile ('Ready Biodegradability'), appréciée selon la méthode préconisée par l'OCDE sous le N° 301 A ('DOC Die - Away Test'), supérieure à 20 % à 28 jours, en l'occurrence de l'ordre de 25 % et une biodégradabilité intrinsèque aérobie (selon méthode « OCDE 302 B » précitée) supérieure à 20 % à 28 jours, en l'occurrence de l'ordre de 36 %, lesdites valeurs traduisant le fait que le DMI ne peut ni persister indéfiniment dans l'environnement, ni présenter un quelconque risque de bioaccumulation dans le sol, les plantes ou les tissus animaux,
∘ une absence d'effet négatif sur la biodégradabilité d'autres substances,
∘ une absence de toxicité pour les organismes aquatiques tels que bactéries, algues d'eau douce, daphnies et poissons d'eau douce,
∘ un pouvoir solvant remarquablement étendu, en particulier une miscibilité à la très grande majorité des familles d'agents solubilisants utilisées industriellement (alcools, composés terpéniques, composés aldéhydiques, composés cétoniques, composés soufrés, composés fluorés, éthers et esters), à l'exception des seuls alcanes,
∘ un pouvoir compatibilisant ou de tiers solvant de compositions à base d'alcanes, d'huiles minérales ou de distillats de pétrole,
∘ un pouvoir hydrotrope très élevé, c'est-à-dire une très forte aptitude à permettre, en milieu aqueux, une solubilisation de composés insolubles tels que certaines matières colorantes,
∘ une haute stabilité physico-chimique tant en milieu neutre qu'en milieu acide ou alcalin, et
∘ une absence de pouvoir corrosif vis à vis des métaux utilisés classiquement en milieu industriel comme l'acier, la fonte ferreuse, le plomb, l'aluminium, le cuivre, l'étain ou le laiton.

La Société Demanderesse a ensuite imaginé que l'association d'un éther de dianhydrohexitol à des produits tels que les agents solubilisants énumérés ci-avant permettait à ces produits, pourtant de nature chimique et de caractéristiques intrinsèques extrêmement variées, de trouver de nouvelles possibilités d'utilisation dans le dégraissage de matières métalliques autres que le corps humain, et ce, en particulier comme substituts de matières dangereuses, toxiques ou polluantes contenues dans des compositions de traitement de surface.

Il a ainsi été observé que le DMI permettait, même lorsqu'il était présent de façon minoritaire par rapport à un composé B de type agent solubilisant, de procurer un certain nombre d'effets avantageux variables en fonction de la nature de l'agent solubilisant retenu.

La Demanderesse a obtenu en particulier les résultats suivants en associant le DMI à l'un des composés B ci-dessous:
* lactate d'éthyle ou de butyle : réduction de l'odeur, augmentation du point éclair, augmentation de la tension de vapeur, augmentation de la stabilité, extension du pouvoir solvant.
* d-limonène ou dipentène : réduction de l'odeur, augmentation de la viscosité, augmentation de la miscibilité à l'eau, augmentation du point éclair, réduction de l'inflammabilité, extension du pouvoir solvant.
* esters dibasiques : ajustement de la viscosité, amélioration de la rinçabilité, amélioration de la stabilité, réduction de la tension de vapeur, réduction du pouvoir irritant, extension du pouvoir solvant.
* esters méthyliques d'acides gras d'huiles végétales : réduction de la couleur et de l'odeur, réduction de la température de figeage à froid, amélioration de la rinçabilité, extension du pouvoir solvant.
* N-méthylpyrrolidone (NMP) : augmentation de la viscosité, réduction de la tension de vapeur, extension du pouvoir solvant.

Selon un mode de réalisation préféré, l'éther de dianhydrohexitol (composé A) est minoritaire par rapport à l'agent solubilisant au sein de la composition utilisée selon l'invention, laquelle est donc alors caractérisée en ce que :
- le composé B est un agent solubilisant, et
- le ratio pondéral (poids sec /poids sec) composé A/composé B est inférieur à 50/50, de préférence compris entre 2/98 et 40/60.

Ce ratio peut notamment être compris entre 5/95 et 25/75.

Comme indiqué précédemment, le composé B, optionnel, peut également être choisi parmi les agents alcalins.

Par « agents alcalins », on entend notamment les composés choisis dans le groupe comprenant l'ammoniaque, l'urée, les hydroxydes, silicates, métasilicates, aluminosilicates, borates, carbonates, bicarbonates, percarbonates, sulfates, phosphates, phosphonates et hypochlorites de métaux alcalins ou alcalin-terreux, en particulier de sodium, les sels alcalins ou alcalin-terreux d'acides organiques, gras ou non gras, en particulier des acides citrique, lactique, gluconique, formique, tartrique, acétique, laurique, stéarique ou oléïque, les amines primaires, secondaires ou tertiaires, les dérivés aminés d'alcools, d'acides ou de polymères d'acides, en particulier le 2-amino-2 méthyl-1-propanol (« AMP »), les dérivés aminés des acides di-, tri-, tétra ou pentaacétique, mono- ou disuccinique, tartrique, citrique ou phosphonique tels que, par exemple, les dérivés aminés connus de l'homme de l'art sous les abréviations de NTA, EDTA, DTPA, EDTMP, MGDA, EDMS et EDDS, ainsi que les mélanges des produits précités.

De préférence, lorsqu'elle contient au moins un agent alcalin, la composition utilisée conformément à l'invention présente un pH supérieur à 8, de préférence supérieur à 8,5 et plus préférentiellement encore compris entre 9 et 13.

La Société Demanderesse a notamment observé qu'un composé A tel que le DMI, associé à un agent alcalin tel que le métasilicate de disodium ou l'ammoniaque, par exemple au sein d'une composition lessivielle ou de nettoyage, notamment de pH supérieur à 8, avait pour effets d'améliorer les pouvoirs dégraissant et saponifiant de ladite composition.

Comme indiqué précédemment le composé B, optionnel, associé à l'éther de dianhydrohexitol (composé A) peut également être choisi parmi les agents acides.

Par « agents acides », on entend tous les acides, organiques ou minéraux, notamment ceux choisis dans le groupe comprenant les acides chlorhydrique, sulfurique, phosphorique, sulfamique, citrique, lactique, gluconique, formique, tartrique, acétique, octanoïque, oléique ou benzoïque et les mélanges de ces acides.

De préférence, on utilise un agent acide organique.

De préférence, lorsqu'elle contient au moins un agent acide, la composition utilisée conformément à l'invention présente un pH inférieur à 5, de préférence inférieur à 4,5 et plus préférentiellement encore compris entre 1,5 et 4.

Les compositions utilisées dans le procédé selon l'invention peuvent contenir en outre un ou plusieurs autres constituants choisis notamment parmi l'eau, les colorants, les pigments, les épaississants, les gélifiants, les principes actifs et les agents tensio-actifs.

Par « principes actifs », on entend notamment les biocides, nématicides, hélicides, insecticides, raticides, fongicides, herbicides et les agents répulsifs pour animaux.

Par « agents tensio-actifs », on entend tous les tensio-actifs (ou surfactants) qu'ils soient anioniques, cationiques, amphotères ou non-ioniques. Les agents tensio-actifs anioniques peuvent être choisis parmi les en alkylbenzènesulfonates, paraffinesulfonates, oléfinesulfonates, méthylestersulfonates, alkyléthersulfates, sulfates d'alcools gras, savons d'acides gras, sulfoalkylamides d'acides gras, sulfosuccinates, sulfates de diglycolamides, N-aminoacides acylés ou carboxylates de polyoxyéthylène.

Les agents tensio-actifs cationiques peuvent notamment consister en imidazolines, en mono- ou dialkyl ammonium quaternaires ou en esters d'ammonium quaternaires.

Les agents tensio-actifs amphotères peuvent notamment consister en dérivés amphotères de bétaïne tels que les sulfonate et alkylamidopropylsulfo-bétaines ou la bétaïne éthoxylée.

Les agents tensio-actifs non ioniques, lesquels sont les agents tensio-actifs préférés dans le cadre de la présente invention, peuvent notamment être choisis parmi les alcools gras éthoxylés, les copolymères d'oxyde d'alkylène, en particulier d'oxyde d'éthylène ou propylène, les oxydes d'amines, les alcool-amides, les éthers de polyglycérol, les alkylpolyglucosides, alkylpolyglucosamides, les esters de mono- ou dianhydrohexitols, en particulier les esters de sorbitan, éthoxylés ou non, les esters de pentaérythritol.

De préférence, l'agent tensio-actif, en particulier non ionique, présente une biodégradabilité à 28 jours d'au moins 20 %, de préférence d'au moins 70 % selon la méthode « OCDE 302 B » mentionnée précédemment.

L'utilisation d'un éther de dianhydrohexitol, de préférence conjointement avec un composé B choisi parmi les agents solubilisants, agents alcalins ou agents acides, constitue par conséquent un nouveau moyen particulièrement bien adapté aux exigences actuelles, notamment techniques, environnementales et réglementaires, liées au domaine général des compositions destinées au dégraissage des matières métalliques autres que le corps humain, lesdits traitements et lesdites matières pouvant en particulier consister en particulier être ceux indiqués précédemment.

Ces compositions peuvent être en particulier :
b) des compositions destinées au traitement de surface d'une matière métallique, lesdites compositions consistant en des compositions de dégraissage,
d) des compositions se présentant sous forme de lingettes destinées au traitement de dégraissage.

La présente invention va être décrite de façon encore plus détaillée à l'aide des exemples qui suivent et qui ne sont aucunement limitatifs.

### EXEMPLE 1 : Compositions de dégraissage de tôles d'acier.

On dégraisse des tôles d'acier recouvertes d'un film mince uniforme de différentes graisses, lubrifiants ou huiles de coupe entières, utilisés couramment dans l'industrie du traitement des métaux.

On compare l'efficacité dégraissante des compositions suivantes :
- COMPOSITION 1 : trichloroéthylène (TCE) commercialisé par la société RIEDEL-DE HAËN sous le numéro de référence 24254,
- COMPOSITION 2 : dichlorométhane (DCM) commercialisé par la société RIEDEL-DE HAËN sous le numéro de référence 34488,
- COMPOSITION 3 : dipentène (DP) commercialisé par la société FLUKA sous le numéro de référence 42560,
- COMPOSITION 4 : lactate d'éthyle (LE) commercialisé par la société SIGMA - ALDRICH,
- COMPOSITION 5 : diméthylisosorbide (DMI) produit par la Demanderesse sous forme de solution incolore, inodore, faiblement visqueuse et présentant une pureté en diméthylisosorbide de 99,6 % environ,
- COMPOSITION 6 : mélange à parts égales, en poids, de DMI constitutif de la COMPOSITION 5 et de DP constitutif de la COMPOSITION 3,
- COMPOSITION 7 : mélange à parts égales, en poids, de DMI constitutif de la COMPOSITION 5 et de LE constitutif de la COMPOSITION 4.

Ces compositions présentent les propriétés indiquées dans le tableau ci-dessous, lesdites propriétés étant désignées et notées de la façon suivante :
* INF = inflammabilité : - = non ; +/°C = oui/pt éclair.
* VOL = volatilité/aptitude au séchage : 0 = faible ; + = moyenne ; ++ = forte.
* RIN = rinçabilité à l'eau : 0 = mauvaise ; + = bonne ; ++ = excellente.
* BIO = biodégradabilité : 0 = non ; + = oui.
* ORI = origine renouvelable : 0 = non ; + = oui.

| COMPOSITION | CONSTITUANT(S) | INF | VOL | RIN | BIO | ORI |
|---|---|---|---|---|---|---|
| 1 | TCE | - | ++ | 0 | - | - |
| 2 | DCM | - | ++ | 0 | - | - |
| 3 | DP | +/48°C | ++ | 0 | + | + |
| 4 | LE | +/46°C | + | + | + | + |
| 5 | DMI | +/120°C | 0 | ++ | + | + |
| 6 | DMI/DP | +/95°C | + | + | + | + |
| 7 | DMI/LE | +/96°C | + | ++ | + | + |

Les COMPOSITIONS 1 et 2 à base de solvants chlorés, bien qu'ininflammables, ne sont pas biodégradables et ne sont pas d'origine renouvelable contrairement aux autres compositions indiquées. De plus, elles sont reconnues pour avoir une certaine toxicité pour l'homme (étiquetages obligatoires T, Xn, R40, R45 et/ou R65) et pour l'environnement (étiquetages obligatoires R51/R53).

Les COMPOSITIONS 3 et 4, bien qu'elles soient d'origine renouvelable tout en étant biodégradables, présentent des points éclairs trop faibles de sorte qu'un étiquetage R10 est nécessaire (points éclairs compris entre 21 et 51°C).

La COMPOSITION 5 présente des propriétés très avantageuses (point éclair suffisamment élevé, rinçabilité à l'eau excellente, origine renouvelable et intrinsèquement biodégradable). Il est possible avec cette composition d'obtenir par simple rinçage à l'eau, une surface sèche mais un apport d'énergie est nécessaire.

Les COMPOSITIONS 6 et 7, conformes à l'invention, présentent, par rapport aux COMPOSITIONS 3 et 4, l'avantage d'être nettement plus sûres au regard d'un risque d'explosion et ne nécessitent pas l'apposition d'un étiquetage R10. Par rapport à la COMPOSITION 5, les COMPOSITIONS 6 et 7 possèdent les mêmes propriétés avantageuses tout en présentant une bien meilleure aptitude au séchage.

Les performances de ces 7 compositions sont comparées pour 9 graisses et huiles du commerce de natures chimiques différentes.

Ces 9 corps gras sont désignés et définis de la façon suivante :
CG 1 = huile minérale paraffinique,
CG 2 = mélange d'huiles minérales pétrolières,
CG 3 = huile minérale alimentaire,
CG 4 = graisse au bisulfure de molybdène,
CG 5 = mélange d'huile minérale, d'hydrocarbures paraffiniques et de graphite,
CG 6 = huile polydiméthyl siloxanique,
CG 7 = mélange huileux polycoupe,
CG 8 = microémulsion polyvalente biostable,
CG 9 = lubrifiant spécial non chloré.

En vue de l'évaluation, on imbibe un coton avec la composition testée, puis ce coton est mis en contact avec un film mince et uniforme de corps gras déposé à la surface d'une plaque d'acier. Cette opération est renouvelée à deux reprises. La plaque d'acier est ensuite rincée à l'eau froide de façon à entraîner le solvant. On note ensuite l'effet dégraissant comme suit :
Note = 1 : présence résiduelle visible d'une pellicule grasse.
Note = 2 : présence résiduelle visible de petites tâches grasses.
Note = 3 : absence visible de corps gras (tôle dégraissée).

Les résultats obtenus pour chaque composition appliquée à chacun des 9 corps gras, sont résumés dans le tableau ci-dessous.

Pour chacune des COMPOSITIONS 1 à 7, une « note globale » est attribuée en fonction du nombre de corps gras pour lesquels la composition en question n'a pas permis d'atteindre la note de 3. Cette note globale, d'une valeur maximale de 10, est attribuée de la façon suivante :
10/10 : la composition a obtenu une note de 3 pour l'ensemble des 9 corps gras,
9/10 : la composition a obtenu une note de 3 pour 8 corps gras,
8/10 : la composition a obtenu une note de 3 pour 7 corps gras,
7/10 : la composition a obtenu une note de 3 pour 6 corps gras,
6/10 : la composition a obtenu une note de 3 pour 5 corps gras.

Le tableau ci-dessous reprend donc, pour chacune des COMPOSITIONS 1 à 7, la note obtenue a) pour le dégraissage spécifique de chacun des corps gras CG 1 à CG 9 déposés (note de 1 à 3) et b) de manière globale, comme composition dégraissante (notes de 6/10 à 10/10).

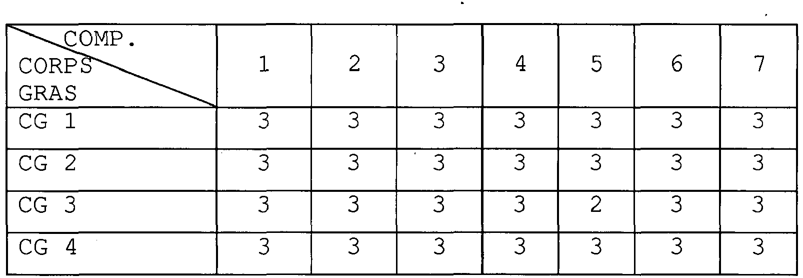

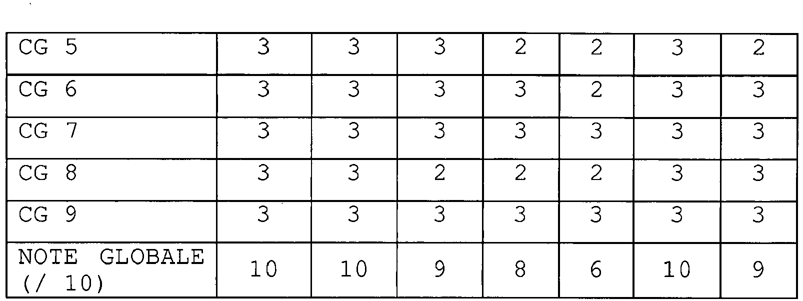

Les COMPOSITIONS 4 et 5 apparaissent, dans le cas présent, moins efficaces que les autres compositions testées. Elles présentent cependant un effet dégraissant indéniable et il est remarquable de constater que la COMPOSITION 5, à base uniquement de DMI, permet d'éliminer, sans traces résiduelles visibles, des corps gras de natures aussi différentes que les corps gras CG1, CG2, CG4, CG7 et CG 9.

La COMPOSITION 7 présente, contre toute attente, des performances dégraissantes meilleures que celles des COMPOSITIONS 4 et 5 alors qu'elle est à base d'un mélange de DMI et de LE.

Il en est de même pour la COMPOSITION 6 qui s'avère plus performante que la COMPOSITION 3 ou que la COMPOSITION 5.

En définitive, les COMPOSITIONS 5, 6 et 7 utilisables selon l'invention constituent des produits particulièrement intéressants pour un usage en dégraissage du fait de leur rinçabilité à l'eau, de leur sûreté d'usage, de leur biodégradabilité, de leur origine renouvelable et, notamment pour les COMPOSITIONS 6 et 7, de leur efficacité dégraissante vis-à-vis de types de graisses et d'huiles très variées et d'ordinaire utilisées dans l'industrie du traitement de surface des métaux. Elles peuvent, y compris la COMPOSITION 5, avantageusement remplacer dans cette fonction les solvants chlorés toxiques et dangereux pour la santé que sont le TCE ou le DCM, ou encore les composés terpéniques tels que le DP et les lactates tels que le LE dont les points éclairs sont généralement considérés comme insuffisamment élevés pour éviter les risques d'explosion.

## Revendications

1. Utilisation d'un éther de dianhydrohexitol (Composé A), dans une composition de traitement de surface, pour le dégraissage de la surface d'une matière autre que le corps humain choisie parmi les matières métalliques, par la mise en contact de ladite matière avec ladite composition.

2. Utilisation selon la revendication 1, **caractérisée en ce que** l'éther de dianhydrohexitol est choisi parmi les éthers alkyliques de dianhydrohexitols, de préférence parmi les éther de méthyle, d'éthyle, d'hexyle et de 2-éthylhexyle de l'isosorbide, de l'isomannide et/ou de l'isoidide.

3. Utilisation selon l'une quelconque des revendications 1 à 2, **caractérisée en ce que** la composition comprend en outre au moins un composé B choisi parmi les agents solubilisants, les agents alcalins et les agents acides.

4. Utilisation selon la revendication 3, **caractérisée en ce que** le composé A et le composé B sont présents au sein de ladite composition selon un ratio pondéral composé A /composé B, exprimé en poids sec/poids sec, compris entre 2/98 et 98/2, de préférence compris entre 5/95 et 95/5.

5. Utilisation selon l'une quelconque des revendications 3 ou 4, **caractérisée en ce que** le composé B est un agent solubilisant présentant :
a) une pression de vapeur, à 25°C, inférieure à 13,3 Pa, de préférence au plus égale à 10 Pa, et/ou
b) un point éclair supérieur à 60°C, de préférence supérieur à 70°C et plus préférentiellement encore supérieur à 85°C, et/ou
c) une biodégradabilité (OCDE 302 B) telle qu'après 28 jours, au moins 20 %, de préférence au moins 70 %, dudit agent solubilisant, se soit dégradé.

6. Utilisation selon l'une quelconque des revendications 3 à 4, **caractérisée en ce que** le composé B est un agent solubilisant choisi parmi les alcools gras liquides à 25°C, les alcools non gras, les esters de glycérol et de dianhydrohexitols, les esters de monoacides non gras, les esters de polyacides non gras, les esters d'acides gras, les composés terpéniques, les éthers de glycérol, les éthers de propylèneglycol, les composés fluorés, les composés soufrés, les fluides supercritiques et les mélanges de ces produits (composé B).

7. Utilisation selon la revendication 6, **caractérisée en ce que** l'agent solubilisant est choisi parmi a) les alcools non gras, de préférence l'isosorbide, le glycérol, l'éthanol, le propanol, l'isopropanol et le 2-butoxyéthanol, b) les esters de glycérol et de dianhydrohexitols, en particulier la triacétine, la tributyrine, les acétates, butyrates, isobutyrates, n-hexylates, éthylhexylates et octanoates d'isosorbide ou d'isoidide, c) les esters, en particulier méthyliques, éthyliques, n-butyliques, isobutyliques, n-propyliques, propyliques, hexyliques et éthylhexyliques, des acides lactique, acétique, adipique, succinique, glutarique ou des acides gras comprenant de 3 à 24 atomes de carbone, d) les composés terpéniques, en particulier le d-limonène et les pinènes, e) les éthers de glycérol et f) les mélanges de ceux-ci.

8. Utilisation selon l'une des revendications 3 ou 4, **caractérisée en ce que** le composé B est choisi parmi les agents alcalins et les agents acides.

9. Utilisation selon l'une quelconque des revendications 1 à 8, **caractérisée en ce que** la composition se présente sous forme de lingettes.

10. Utilisation selon l'une quelconque des revendications 1 à 9, **caractérisée en ce que** l'éther de dianhydrohexitol est le diméthylisosorbide (« DMI »).

## Patentansprüche

1. Verwendung eines Dianhydrohexitol-Ethers (Verbindung A) in einer Oberflächenbehandlungszusammensetzung zum Entfetten der Oberfläche eines anderen Materials als des menschlichen Körpers, ausgewählt aus metallischen Materialien, durch Kontaktieren des Materials mit der Zusammensetzung.

2. Verwendung nach Anspruch 1,
**dadurch gekennzeichnet, dass** der Dianhydrohexitol-Ether ausgewählt ist aus den Alkylethern von Dianhydrohexitolen, vorzugsweise aus den Methyl-, Ethyl-, Hexyl- und 2-Ethylhexyl-Ethern von Isosorbid, von Isomannid und/oder von Isoidid.

3. Verwendung nach einem der Ansprüche 1 bis 2,
**dadurch gekennzeichnet, dass** die Zusammensetzung weiterhin wenigstens eine Verbindung B umfasst, die aus den Lösungsmitteln, den alkalischen Wirkstoffen und den sauren Wirkstoffen ausgewählt ist.

4. Verwendung nach Anspruch 3,
**dadurch gekennzeichnet, dass** die Verbindung A und die Verbindung B in der Zusammensetzung gemäß einem Gewichtsverhältnis Verbindung A / Verbindung B, ausgedrückt in Trockengewicht/Trockengewicht, von einschließlich zwischen 2/98 und 98/2 vorliegen, vorzugsweise von einschließlich zwischen 5/95 und 95/5.

5. Verwendung nach einem der Ansprüche 3 oder 4,
**dadurch gekennzeichnet, dass** die Verbindung B ein Lösungsmittel ist, welches aufweist:
a) einen Dampfdruck bei 25°C von unter 13,3 Pa, vorzugsweise von höchstens gleich 10 Pa und/oder
b) einen Flammpunkt oberhalb von 60°C, vorzugsweise oberhalb von 70°C und noch mehr bevorzugt oberhalb von 85°C, und/oder
c) eine biologische Abbaubarkeit (OCDE 302B), so dass nach 28 Tagen wenigstens 20%, vorzugsweise wenigstens 70% des Lösungsmittels abgebaut ist.

6. Verwendung nach einem der Ansprüche 3 bis 4,
**dadurch gekennzeichnet, dass** die Verbindung B ein Lösungsmittel ist, das ausgewählt ist aus den Fett-Alkoholen, die bei 25°C flüssig sind, den Nicht-Fett-Alkoholen, den Estern von Glycerin und von Dianhydrohexitolen, den Estern von Nicht-Fett-Monosäuren, den Estern von Nicht-Fett-Polysäuren, den Estern von Fettsäuren, den Terpen-Verbindungen, den Glycerinethern, den Propylenglycolethern, den Fluor-Verbindungen, den Schwefel-Verbindungen, den überkritischen Fluiden und den Mischungen dieser Produkte.

7. Verwendung nach Anspruch 6,
**dadurch gekennzeichnet, dass** das Lösungsmittel ausgewählt ist aus a) den Nicht-Fett-Alkoholen, vorzugsweise Isosorbid, Glycerin, Ethanol, Propanol, Isopropanol und 2-Butoxyethanol, b) den Estern von Glycerin und von Dianhydrohexitolen, insbesondere Triacetin, Tributyrin, den Acetaten, Butyraten, Isobutyraten, n-Hexylaten, Ethylhexylaten und Octanoaten von Isosorbid oder von Isoidid c) den Estern, vorzugsweise den Methyl-, Ethyl-, n-Butyl-, Isobutyl-, n-Propyl-, Propyl-, Hexyl- und Ethylhexyl-Estern, der Milch-, Essig-, Adipin-, Bernstein-, Glutar- oder der Fettsäuren, die 3 bis 24 Kohlenstoffatome umfassen d) den Terpen-Verbindungen, insbesondere d-Limonen und den Pinenen, e) den Glycerinethern und f) den Mischungen daraus.

8. Verwendung nach einem der Ansprüche 3 oder 4,
**dadurch gekennzeichnet, dass** die Verbindung B ausgewählt ist aus den alkalischen Wirkstoffen und den sauren Wirkstoffen.

9. Verwendung nach einem der Ansprüche 1 bis 8,
**dadurch gekennzeichnet, dass** die Zusammensetzung in Form von Tüchern vorliegt.

10. Verwendung nach einem der Ansprüche 1 bis 9,
**dadurch gekennzeichnet, dass** der Dianhydrohexitol-Ether Dimethylisosorbid ("DMI") ist.

## Claims

1. Use of a dianhydrohexitol ether (compound A), in a surface-treatment composition, for degreasing the surface of a material other than the human body chosen from metallic materials, by contacting said material with said composition.

2. The use as claimed in claim 1, **characterized in that** the dianhydrohexitol ether is selected from dianhydrohexitol alkylethers, preferably from isosorbide, isomannide and/or isoidide methyl, ethyl, hexyl or 2-ethylhexyl ethers.

3. The use as claimed in any one of claims 1 to 2, **characterized in that** the composition also comprises at least one compound B chosen from solubilising agents, alkaline agents and acidic agents.

4. The use as claimed in claim 3, **characterized in that** compound A and compound B are present within said composition according to a compound A/compound B weight ratio, expressed as dry weight/dry weight, of between 2/98 and 98/2, preferably of between 5/95 and 95/5.

5. The use as claimed in any one of claims 3 or 4, **characterized in that** compound B is a solubilising agent exhibiting:
a) a vapour pressure at 25°C of less than 13.3 Pa, preferably at most equal to 10 Pa, and/or
b) a flashpoint of greater than 60°C, preferably greater than 70°C and more preferably still of greater than 85°C, and/or
c) biodegradability (OECD 302 B) such that, after 28 days, at least 20%, preferably at least 70%, of said solubilising agent has decomposed.

6. The use as claimed in any one of claims 3 to 4, **characterized in that** compound B is a solubilising agent chosen from fatty alcohols which are liquid at 25°C, non-fatty alcohols, esters of glycerol and dianhydrohexitols, esters of non-fatty monoacids, esters of non-fatty polyacids, esters of fatty acids, terpene compounds, glycerol ethers, ethers of propylene glycols, fluorinated compounds, sulfur-comprising compounds, supercritical fluids and the mixtures of these compounds.

7. The use as claimed in claim 6, **characterized in that** the solubilising agent is chosen from a) non-fatty alcohols, preferably isosorbide, glycerol, ethanol, propanol, isopropanol and 2-butoxyethanol, b) esters of glycerol and dianhydrohexitols, in particular triacetin, tributyrin and isosorbide or isoidide acetates, butyrates, isobutyrates, n-hexylates, ethylhexylates and octanoates, c) esters, in particular methyl, ethyl, n-butyl, isobutyl, n-propyl, propyl, hexyl and ethylhexyl esters, of lactic acid, acetic acid, adipic acid, succinic acid, glutaric acid and fatty acids comprising from 3 to 24 carbon atoms, d) terpene compounds, in particular d-limonene and pinenes, e) glycerol ethers and f) mixtures of these.

8. The use as claimed in either of claims 3 or 4, **characterized in that** compound B is chosen from alkaline agents and acidic agents.

9. The use as claimed in any one of claims 1 to 8, **characterized in that** the composition is in the form of wipes.

10. The use as claimed in any one of claims 1 to 9, **characterized in that** the dianhydrohexitol ether is dimethyl isosorbide ("DMI").
